Europäisches Patentamt

European Patent Office

Office européen des brevets

(11) Veröffentlichungsnummer: **0 196 514 B1**

# EUROPÄISCHE PATENTSCHRIFT

(45) Veröffentlichungstag der Patentschrift: **28.08.91**

(21) Anmeldenummer: **86103405.6**

(22) Anmeldetag: **13.03.86**

(51) Int. Cl.5: **G06K 9/32**, G06F 15/70, G06K 9/36

(54) **Einrichtung zur Detektion von Kanten.**

(30) Priorität: **29.03.85 DE 3511624**

(43) Veröffentlichungstag der Anmeldung:
**08.10.86 Patentblatt 86/41**

(45) Bekanntmachung des Hinweises auf die
Patenterteilung:
**28.08.91 Patentblatt 91/35**

(84) Benannte Vertragsstaaten:
**DE FR GB**

(56) Entgegenhaltungen:
EP-A- 0 059 240
DE-A- 2 816 324
DE-A- 3 208 135
DE-A- 3 524 505

PATENT ABSTRACTS OF JAPAN Band 7, Nr.
164 (P-211)(1309), 19. Juli 1983; & JP - A - 58
72275 ( Nippon Denshin Dewa Kosha) 30. 04.
1983

(73) Patentinhaber: **Siemens Aktiengesellschaft
Wittelsbacherplatz 2
W-8000 München 2(DE)**

(72) Erfinder: **Maier, Reinhold, Dipl.-Ing.
Sudelfeldstrasse 75
W-8204 Brannenburg(DE)**
Erfinder: **Kilgenstein, Siegfried, Dipl.-Ing.
Ramannstrasse 5
W-8000 München 50(DE)**

**Beschreibung**

Die Erfindung betrifft eine Einrichtung zur Detektion von Kanten nach dem Oberbegriff des Anspruchs 1.

Zur Automatisierung visueller Prüf- und Justieraufgaben werden optoelektronische Bildwandler eingesetzt, die ein Bild der zu bearbeitenden Szene aufnehmen. Das von den Bildwandlern erzeugte Videosignal wird digitalisiert und einer Recheneinheit zur Auswertung übergeben. Da in vielen Fällen die Umrisse bzw. Kanten der Bildstrukturen gegenüber ihrer Umgebung einen geringen Kontrast aufweisen, der Kontrast starken örtlichen und zeitlichen Schwankungen unterliegt und auch starke örtliche Helligkeitsunterschiede in der Umgebung auftreten, ist es erforderlich, spezielle Verfahren zur Detektion von Kanten anzuwenden. Diese Detektion von Kanten könnte mit Hilfe eines Bildspeichers softwaremäßig realisiert werden. Um höhere Verarbeitungsgeschwindigkeiten zu erreichen und um den aufwendigen Bildspeicher zu vermeiden, wird jedoch eine hardwaremäßige Bildvorverarbeitung angestrebt, die die anfallende Datenmenge erheblich reduziert.

Aus der DE-PS 28 16 324 ist ein Verfahren zur automatischen Lageerkennung von Halbleiter-Schaltkreisen bekannt, bei welchem die Erkennung anhand der Orientierung von Ritz- oder Systemkanten auf den Schaltkreisen erfolgt. Diese in Form rechtwinkliger, geradliniger Strukturen auf der Oberfläche der Schaltkreise vorhandenen Kanten werden auf zwei Bildwandler abgebildet, deren zeilenförmige Bildabtastrichtungen orthogonal zueinander liegen und zu den jeweiligen Kanten parallel oder annähernd parallel ausgerichtet sind.

Zur Lagebestimmung der Kanten werden in einer vorzugsweise analogen Bildvorverarbeitung die momentanen Helligkeitswerte der Bildabtastungen zeilenweise aufintegriert, wobei das Rauschen verringert und kleinere Unregelmäßigkeiten der Kanten unterdrückt werden. Aus den Hüllkurven der gesamten Zeilenintegrale lassen sich dann die jeweils parallel zu den Zeilen verlaufenden Kanten relativ einfach ermitteln. Als Bildwandler werden handelsübliche Fernsehkameras mit Bildaufnahmeröhren oder CCD-Bildwandler eingesetzt, wobei die im Hinblick auf die Lagebestimmung orthogonal zueinander ausgerichteter Kanten vorgesehene doppelte Anordnung derartiger Bildwandler jedoch einen erheblichen Aufwand bedeutet. Zur Reduzierung dieses Aufwandes kann auch nur ein Bildwandler eingesetzt werden, welcher die zweite Kantenrichtung durch eine optische Bilddrehung erfaßt. Hier verursacht die optische Drehung jedoch einen relativ hohen optischen und mechanischen Aufwand. Es ist aber auch möglich, einen Bildwandler vorzusehen, dessen Bildabtastrichtungen nicht festgelegt sind. Die Realisierung und der Einsatz entsprechender Halbleiter-Bildwandler mit wahlfreiem Bildzugriff wäre jedoch ebenfalls mit einem erheblichen Aufwand verbunden.

Als Bildwandler sind CCD-Bildwandler den Fernsehkameras mit Bildaufnahmeröhren hinsichtlich der Geschwindigkeit der Bildverarbeitung, der Genauigkeit, der Lebensdauer und der mechanischen Stabilität überlegen. Außerdem zeichnen sich CCD-Bildwandler noch durch ihre geringe Größe und ihr geringes Gewicht aus.

Der Erfindung liegt die Aufgabe zugrunde, eine Einrichtung zur Detektion von Kanten zu schaffen, bei welcher die verrauschten Videosignale eines einzigen CCD-Bildwandlers hardwaremäßig mit geringem Aufwand so aufbereitet werden, daß rechtwinklige Strukturen, deren Kanten parallel und senkrecht zu den Zeilen der Bildabtastung verlaufen, schnell und sicher gefunden werden.

Diese Aufgabe wird bei einer gattungsgemäßen Einrichtung zur Detektion von Kanten durch die kennzeichnenden Merkmale des Anspruchs 1 gelöst.

Der Erfindung liegt die Erkenntnis zugrunde, daß das seriell Zeile für Zeile ausgelesene Videosignal eines CCD Bildwandlers bildpunktgenau digitalisiert und dann in zwei parallel arbeitenden Schaltungsblöcken für die Zeilenintegration und die Spaltenintegration in Echtzeit verarbeitet werden kann. In dem für die Zeilenintegration vorgesehenen Zeilen-Integrator werden alle Helligkeitswerte einer Zeile oder eines Zeilenabschnittes seriell aufaddiert, worauf das Ergebnis, d.h. das resultierende Zeilenintegral, in einem der jeweiligen Zeile zugeordneten Speicherplatz abgelegt wird. In dem für die Spaltenintegration vorgesehenen Spalten-Integrator müssen alle Helligkeitswerte, die den Spalten oder auch Spaltenabschnitten der Bildmatrix des CCD Bildwandlers zugeordnet sind, addiert werden. Da das Videosignal des CCD-Bildwandlers seriell Zeile für Zeile das Bild wiedergibt, werden die Helligkeitswerte der Spalten nicht zeitlich hintereinander ausgelesen, so daß Zwischensummen gebildet und spaltenweise gespeichert werden müssen. Hierzu wird bei der ersten Zeile jeder Helligkeitswert eines Bildelementes in einem zugeordneten eigenen Spalten-Speicherplatz abgelegt. Bei der darauffolgenden Zeile wird der Spalten-Speicherplatz des in der entsprechenden Spalte darüberliegenden Bildelementes ausgelesen, der neue Helligkeitswert hinzuaddiert und die Zwischensumme wieder eingeschrieben. Dieser Vorgang wiederholt sich Zeile für Zeile, bis das ganze Bild abgearbeitet ist. Auf diese Weise stehen sofort nach dem Durchlauf nur eines einzigen Bildes alle Integrale der Zeilen und Spalten in entsprechenden Speicherplätzen zur Verfügung. Die weitere Verarbeitung der Zeilenintegrale und Spaltenintegrale zur Lagebestimmung orthogonal zueinander verlaufender Kanten kann dann nach bekannten Methoden in der Recheneinheit vorgenommen werden. Da durch die hardwaremäßige zeilen- und spaltenweise Integration die Anzahl der auszuwertenden Daten um Zehnerpotenzen verringert wird, kann eine schnelle und kostengünstige Bildauswertung erreicht werden.

Gemäß einer bevorzugten Ausgestaltung der Erfindung ist vorgesehen, daß in dem Zeilen-Integrator der momentane Helligkeitswert der Bildabtastung und die aus einem Zwischenspeicher entnehmbare Zwischensumme der vorausgegangenen Helligkeitswerte einer Zeile in einem Addierer addierbar und die resultierende neue Zwischensumme oder Endsumme dem Zwischenspeicher wieder zuführbar sind, wobei am Ende jeder Zeile das im Zwischenspeicher als Endsumme anstehende Zeilenintegral in den zugeordneten Zeilen-Speicherplatz übertragbar ist. Die Bildung und das Speichern der Zeilenintegrale erfordern also nur einen äußerst geringen schaltungstechnischen Aufwand.

Gemäß einer weiteren bevorzugten Ausgestaltung der Erfindung ist vorgesehen, daß in dem Spalten-Integrator der momentane Helligkeitswert der Bildabtastung und die aus dem zugeordneten Spalten-Speicherplatz entnehmbare Zwischensumme der vorausgegangenen Helligkeitswerte der jeweiligen Spalte in einem Addierer addierbar und die resultierende neue Zwischensumme oder das als Endsumme anstehende Spaltenintegral wieder in den zugeordneten Spalten-Speicherplatz übertragbar sind. Die Bildung und das Speichern der Spaltenintegrale erfordern also ebenfalls nur einen äußerst geringen schaltungstechnischen Aufwand.

Weiterhin ist es vorteilhaft, wenn die Zeilenintegrale und die Spaltenintegrale nach jedem Bilddurchlauf über einen Multiplexer in die Recheneinheit eingebbar sind. Der Multiplexer ermöglicht also auf einfache Weise das zeitlich nacheinander erfolgende Abfragen der im Zeilen-Integrator und im Spalten-Integrator gespeicherten Daten.

Schließlich ist es im Hinblick auf die Schnelligkeit der Bildverarbeitung äußerst günstig, wenn die Zeilenintegrale und die Spaltenintegrale nach jedem Bilddurchlauf über einen Pufferspeicher in die Recheneinheit übertragbar sind. Vom Pufferspeicher kann dann die Recheneinheit die Integralwerte in ihren Arbeitsspeicher einlesen, während die Integration der Helligkeitswerte des nächsten Bilddurchlaufes schon stattfindet.

Ein Ausführungsbeispiel der Erfindung ist in der Zeichnung dargestellt und wird im folgenden näher beschrieben.

Es zeigen

Fig.1    in stark vereinfachter schematischer Darstellung ein Blockschaltbild einer Einrichtung zur Detektion von Kanten,

Fig.2    die Zuordnung von Zeilen-Speicherplätzen und Spalten-Speicherplätzen zu der Bildmatrix eines bei der Einrichtung nach Fig.1 eingesetzten CCD-Bildwandlers,

Fig.3    ein Blockschaltbild der Einrichtung nach Fig.1, aus welchem die Wirkungsweise der Zeilenintegration und der Spaltenintegration hervorgeht und

Fig.4    ein Beispiel für die Lageermittlung orthogonal zueinander verlaufender Kanten mit Hilfe der in Fig.1 dargestellten Einrichtung.

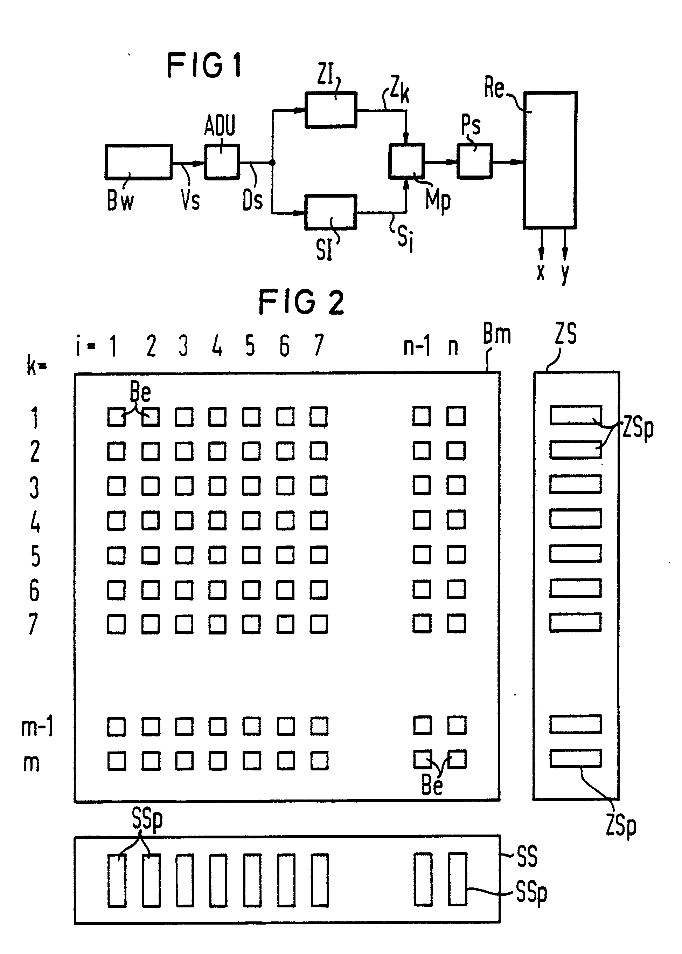

Fig.1 zeigt in stark vereinfachter schematischer Darstellung ein Blockschaltbild einer Einrichtung zur Detektion von Kanten, welche in Form rechtwinkliger, geradliniger Strukturen beispielsweise auf der Oberfläche von Halbleiter-Schaltkreisen vorliegen und mit Hilfe eines in der Zeichnung nicht dargestellten Mikroskops auf die Bildmatrix eines CCD-Bildwandlers $Bw$ abgebildet werden. Der CCD-Bildwandler $Bw$ setzt das auf seiner Bildmatrix fokussierte Bild in einzelne elektrische Ladungspakete um, die dann sehr schnell durch Ladungsübertragungstechniken in Form eines Videosignals $Vs$ seriell Zeile für Zeile ausgelesen werden. Das analoge Videosignal $Vs$ wird in einem Analog-Digital-Umsetzer ADU bildpunktgenau digitalisiert. Anschließend wird der Datenstrom $Ds$ in zwei parallel arbeitenden Schaltungsblöcken für die Zeilenintegration und die Spaltenintegration in Echtzeit verarbeitet, wobei es sich bei diesen Schaltungsblöcken um einen Zeilen-Integrator $ZI$ und einen Spalten-Integrator $SI$ handelt. Die Aufgaben der beiden parallel arbeitenden Integratoren werden nachfolgend unter zusätzlicher Bezugnahme auf die Fig.2 aufgezeigt.

In Fig.2 ist die Bildmatrix $Bm$ des CCD-Bildwandlers $Bw$ dargestellt, deren einzelne Bildelemente $Be$ in Zeilen $k = 1$ bis $k = m$ und Spalten $i = 1$ bis $i = n$ angeordnet sind. Für die Lageerkennung von integrierten Schaltkreisen wird beispielsweise ein CCD-Bildwandler mit $k = 570$ Zeilen und $i = 400$ Spalten eingesetzt. Neben diesen $n \times m$ Bildelementen $Be$ für die Schaffung des Bildes enthält der CCD-Bildwandler $Bw$ nochmals die gleiche Anzahl - in der Zeichnung nicht dargestellter - elektronischer Elemente, die zur Speicherung und Auslesung verwendet werden. Das Videosignal $Vs_{i, k}$ der Bildelemente $Be$ wird seriell Zeile für Zeile von $k = 1$ bis $k = m$ ausgelesen, wobei jeder Zeile $k$ ein eigener Zeilenspeicherplatz speicherplatz $ZSp$ eines mit ZS bezeichneten Zeilen-Speichers Zugeordnet ist. Alle $n$ Helligkeitswerte $H_{i, k}$ einer Zeile $k$ werden in dem Zeilen-Integrator $ZI$ seriell aufaddiert, worauf das als Ergebnis gebildete Zeilenintegral

$$Z_k = \sum_{i=1}^{n} H_{i,k}$$

in den zugeordneten Zeilen-Speicherplatz ZSp abgelegt wird. Auch jeder Spalte i = 1 bis i = n ist ein eigener SpaltenSpeicherplatz SSp eines Spalten-Speichers SS zugeordnet. Alle m Helligkeitswerte $H_{i,k}$ einer Spalte i werden in dem Spalten-Integrator SI aufaddiert, worauf das als Ergebnis gebildete Spaltenintegral

$$S_i = \sum_{k=1}^{m} H_{i,k}$$

in dem zugeordneten Spalten-Speicherplatz SSp abgelegt wird. Nach dem Durchlauf eines Bildes, der beispielsweise 20 ms dauert, stehen somit im Zeilen-Speicher ZS alle Zeilenintegrale $Z_k$ und im Spalten-Speicher SS alle Spaltenintegrale $S_i$ zur Verfügung. Sobald das Bild abgearbeitet ist, werden die Zeilenintegrale $Z_k$ und Spaltenintegrale $S_i$ dann über einen Multiplexer Mp in einen Pufferspeicher Ps übernommen und in den Arbeitsspeicher einer Recheneinheit Re eingegeben, während die Integration der Helligkeitswerte des nächsten Bild-durchlaufes schon stattfindet. In der Recheneinheit Re, bei welcher es sich beispielsweise um einen Mikrocomputer handelt, werden dann die Zeilenintegrale $Z_k$ und Spaltenintegrale $S_i$ ausgewertet und beispielsweise die Ortskoordinaten x, y der aufzufindenden Kanten ausgegeben. Die Auswertung wird dabei nach üblichen Methoden vorgenommen, beispielsweise nach den in der DE-PS 28 16 324 oder der DE-PS 28 22 269 beschriebenen Methoden.

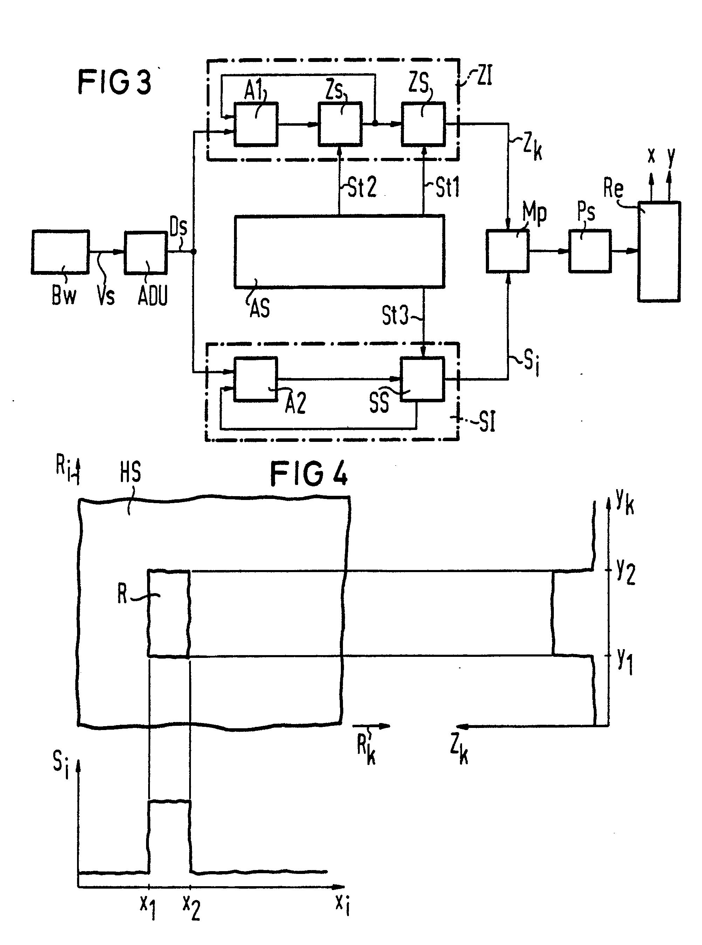

Die Wirkungsweise der Zeilenintegration und der Spaltenintegration geht aus dem in Fig.3 dargestellten Blockschaltbild hervor, in welchem gegenüber dem Blockschaltbild nach Fig.1 zusätzlich noch die Bausteine des Zeilen-Integrators ZI und des Spalten-Integrators SI und die erforderliche Ablauf-Steuerung AS dargestellt sind.

In dem Zeilen-Integrators ZI sind einem Addierer A1 ein Zwischenspeicher Zs und der bereits in Fig.2 mit seinen Zeilen-Speicherplätzen ZSp dargestellte Zeilen-Speicher ZS nachgeordnet. In dem Addierer AI werden der momentane Helligkeitswert $H_{i,k}$ der Bildabtastung und die aus dem Zwischenspeicher Zs ausgelesene Zwischensumme der vorausgegangenen Helligkeitswerte $H_{i,k}$ einer Zeile k addiert, worauf die resultierende neue Zwischensumme oder am Ende einer Zeile k die Endsumme in den Zwischenspeicher Zs wieder eingeschrieben wird. Die Ablauf-Steuerung AS gibt am Ende jeder Zeile k an den Zeilen-Speicher ZS ein Steuersignal St1 mit der Aufforderung für die Übernahme des im Zwischenspeicher Zs enthaltenen Zeilenintegrals $Z_k$ und mit der Addresse des der jeweiligen Zeile k zugeordneten Zeilen-Speicherplatzes ZSp (vergl. Fig.2). Nach der Übernahme wird dann der Zwischenspeicher Zs durch ein Steuersignal St2 der Ablauf-Steuerung AS gelöscht.

In dem Spalten-Integrator SI ist einem Addierer A2 der bereits in Fig.2 mit seinen Spalten-Speicherplätzen SSp dargestellte Spalten-Speicher SS nachgeordnet. In dem Addierer A2 werden der momentane Helligkeitswert $H_{i,k}$ der Bildabtastung und die aus dem zugeordneten Spalten-Speicherplatz SSp des Spalten-Speichers SS ausgelesenen Zwischensummen der vorausgegangenen Helligkeitswerte $H_{i,k}$ der jeweiligen Spalte i addiert, worauf die resultierende neue Zwischensumme oder am Ende einer Spalte i die Endsumme in den zugeordneten Spalten-Speicherplatz SSp des Spalten-Speichers SS wieder eingeschrieben wird. Die Befehle für den entsprechenden Datentransfer und die Adressen der jeweiligen Spalten-Speicherplätze SSp werden dabei von der Ablauf-Steuerung AS durch ein Steuersignal St3 bereitgestellt, wobei dieses Steuersignal St3 jeweils am Bildanfang auch einen Löschbefehl für sämtliche Spalten-Speicherplätze SSp enthält.

Eine in der Zeichnung nicht dargestellte Synchronisations-Schaltung synchronisiert die Ablauf-Steuerung AS und den Analog-Digital-Umsetzer ADU mit dem Videosignal Vs des CCD-Bildwandlers Bw.

Fig.4 zeigt ein Videobild der Bildmatrix Bm des CCD-Bildwandlers Bw (vergl. Fig.1, 2 und 3) mit einem Ausschnitt der Oberfläche eines Halbleiter-Schaltkreises HS und einem auf dieser Oberfläche zu detektierenden, insgesamt dunkleren oder helleren Rechteck R. Die beiden kürzeren Kanten des Rechteckes R verlaufen dabei parallel zur Richtung $R_k$ der Zeilen k, während die beiden längeren Kanten des Rechtecks R parallel zur Richtung $R_i$ der Spalten i verlaufen. Die in den Spalten-Speicherplätzen SSp (vergl. Fig.2) enthaltenen Spaltenintegrale $S_i$ sind als Funktion der Ortskoordinate $x_i$ aufgetragen, während die in den Zeilen-Speicherplätzen ZSp enthaltenen Zeilenintegrale $Z_k$ als Funktion der Ortskoordinate $y_k$ aufgetragen sind. Die Ortskoordinate $x_i$ verläuft dabei parallel zur Richtung $R_k$ der Zeilen k, während die Ortskoordinate $y_k$ parallel zur Richtung $R_i$ der Spalten i verläuft. Es ist zu erkennen, daß die Ortskoordinaten $x_1$, $x_2$ und $y_1$, $y_2$ des zu detektierenden Rechtecks R aus den nach einem Bilddurchlauf gespeicherten Spaltenintegralen $S_i$ bzw. Zeilenintegralen $Z_k$ leicht aufgefunden werden können.

**Patentansprüche**

1. Einrichtung zur Detektion von Kanten, insbesondere für die Lageerkennung von integrierten Schaltkreisen, mit einem CCD-Bildwandler für die zeilenförmige Bildabtastung in zu den gesuchten Kanten parallel verlaufenden Geraden, wobei die momentanen Helligkeitswerte der Bildabtastung zeilenweise oder zeilenabschnittsweise aufintegriert und die resultierenden Zeilenintegrale in einer Recheneinheit zur Auffindung der gesuchten Kanten ausgewertet werden,

   **gekennzeichnet** durch folgende Merkmale:

   a. Das Videosignal (Vs) des CCD-Bildwandlers (Bw) ist über einen Analog-Digital-Umsetzer (ADU) einem Zeilen-Integrator (ZI) und einem parallel dazu angeordneten Spalten-Integrator (SI) zuführbar,

   b. in dem Zeilen-Integrator (ZI) sind die den Zeilen (k) oder Zeilenabschnitten der Bildmatrix (Bm) des CCD-Bildwandlers (Bw) zugeordneten Helligkeitswerte der Bildabtastung seriell aufaddierbar und die daraus resultierenden Zeilenintegrale ($Z_k$) in zugeordneten Zeilen-Speicherplätzen (ZSp) ablegbar,

   c. in dem Spalten-Integrator (SI) sind die den Spalten (i) oder Spaltenabschnitten der Bildmatrix (Bm) des CCD-Bildwandlers (Bw) zugeordneten Helligkeitswerte der Bildabtastung aufaddierbar und die daraus resultierenden Spaltenintegrale ($S_i$) in zugeordneten Spalten-Speicherplätzen (SSp) ablegbar.

2. Einrichtung nach Anspruch 1, dadurch **gekennzeichnet**, daß in dem Zeilen-Integrator (ZI) der momentane Helligkeitswert der Bildabtastung und die aus einem Zwischenspeicher (Zs) entnehmbare Zwischensumme der vorausgegangenen Helligkeitswerte einer Zeile (k) in einem Addierer (A1) addierbar und die resultierende neue Zwischensumme oder Endsumme dem Zwischenspeicher (Zs) wieder zuführbar sind, wobei am Ende jeder Zeile (k) das im Zwischenspeicher (Zs) als Endsumme anstehende Zeilenintegral ($Z_k$ in den zugeordneten Zeilen-Speicherplatz (ZSp) übertragbar ist.

3. Einrichtung nach Anspruch 1 oder 2, dadurch **gekennzeichnet**, daß in dem Spalten-Integrator (SI) der momentane Helligkeitswert der Bildabtastung und die aus dem zugeordneten Spalten-Speicherplatz (SSp) entnehmbare Zwischensumme der vorausgegangenen Helligkeitswerte der jeweiligen Spalte (i) in einem Addierer (A2) addierbar und die resultierende neue Zwischensumme oder das als Endsumme anstehende Spaltenintegral ($S_i$) wieder in den zugeordneten Spalten-Speicherplatz (SSp) übertragbar sind.

4. Einrichtung nach einem der vorhergehenden Ansprüche, dadurch **gekennzeichnet**, daß die Zeilenintegrale ($Z_k$) und die Spaltenintegrale ($S_i$) nach jedem Bilddurchlauf über einen Multiplexer (Mp) in die Recheneinheit (Re) eingebbar sind.

5. Einrichtung nach einem der vorhergehenden Ansprüche, dadurch **gekennzeichnet**, daß die Zeilenintegrale ($Z_k$) und die Spaltenintegrale ($S_i$) nach jedem Bilddurchlauf über einen Pufferspeicher (Ps) in die Recheneinheit (Re) übertragbar sind.

**Claims**

1. An edge-detecting device, in particular for the recognition of the position of integrated circuits, having a CCD image converter for linear image scanning in straight lines running parallel to the edges searched for, the momentary brightness values of the image scan being integrated by lines or by line section and the resulting line integrals being evaluated in a computing unit in order to find the edges being searched for, characterised by the following features:

   a. The video signal (Vs) of the CCD image converter (Bw) can be fed via an analog-to-digital-converter (ADU) to a line integrator (ZI) and a column integrator (SI) arranged in parallel thereto,

   b. it being possible to total serially in the line integrator (ZI) the brightness values of the image scan, which values are associated with the lines (K) or line sections of the image matrix (Bm) of the CCD image converter (Bw), and to store the line integrals ($Z_k$) resulting therefrom in associated line memory locations (ZSp),

   c. it being possible to total in the column integrator (SI) the brightness values of the image scan, which are associated with the columns (i) or column sections of the image matrix (Bm) of the CCD image converter (Bw), and to store the column integrals ($S_i$) resulting therefrom in associated column memory locations (SSp).

2. Device according to Claim 1, characterised in that in the line integrator (ZI) the momentary brightness value of the image scan and the subtotal of the preceding brightness values of a line (k), which subtotal is retrievable from a buffer (Zs), can be totalled in an adder (A1) and the resulting new subtotal or total can be fed to the buffer (Zs), it being possible at the end of each line (k) to transfer the line integral $(Z_k)$ present in the buffer (Zs) as a total, into the associated line memory location (ZSp).

3. Device according to Claim 1 or 2, characterised in that in the column integrator (SI) the momentary brightness value of the image scan and the subtotal of the preceding brightness values of the respective column (i), which subtotal can be retrieved from the associated column memory location (SSp), can be totalled in an adder (A2) and the resulting new subtotal or the column integral $(S_i)$, present as a total, can be transferred again into the associated column memory location (SSp).

4. Device according to one of the preceding claims, characterised in that the line integrals $(Z_k)$ and the column integrals $(S_i)$ can be entered into the computing unit (Re) via a multiplexer (Mp) after each image sweep.

5. Device according to one of the preceding claims, characterised in that the line integrals $(Z_k)$ and the column integrals $(S_i)$ can be transferred into the computing unit (Re) via a buffer memory (Ps) after each image sweep.

**Revendications**

1. Dispositif pour la détection de bords, notamment pour l'identification de la position de circuits intégrés, comportant un convertisseur d'images CCD pour le balayage ligne par ligne de l'image suivant des droites parallèles aux bords recherchés, les valeurs instantanées de luminosité du balayage de l'image étant intégrées ligne par ligne ou section de ligne par section de ligne et les intégrales résultantes des lignes étant évaluées dans une unité de calcul pour la détection des bords recherchés, caractérisé par les particularités suivantes:

    a. le signal vidéo (Vs) du convertisseur d'image CCD (Bw) est susceptible d'être envoyé par l'intermédiaire d'un convertisseur analogique/numérique (ADU) à un intégrateur de lignes (ZI) et à un intégrateur de colonnes (ZI) monté en parallèle avec l'intégrateur de lignes,

    b. dans l'intégrateur de lignes (ZI), les valeurs de luminosité du balayage de l'image, qui sont associées aux lignes (k) ou aux sections de lignes de la matrice (Bm) de l'image du convertisseur d'images CCD (Bw) sont susceptible d'être additionnées en série et les intégrales de lignes $(Z_k)$, qui en résultent, sont susceptible d'être mémorisées en des emplacements associés (ZSp) de la mémoire de lignes,

    c. dans l'intégrateur de colonnes (SI), les valeurs de luminosité du balayage de l'image, qui sont associées aux colonnes (i) ou aux sections de colonnes de la matrice (Bm) de l'image du convertisseur de lignes CCD (Bw) sont additionnées et les intégrales de colonnes $(S_i)$, qui en résultent, sont susceptibles d'être mémorisées dans des emplacements associés (SSp) de la mémoire de colonnes.

2. Dispositif suivant la revendication 1, caractérisé par le fait que dans l'intégrateur de lignes (ZI), la valeur instantanée de la luminosité du balayage de l'image et la somme intermédiaire, qui peut être tirée d'une mémoire intermédiaire (Zs), des valeurs précédentes de luminosité d'une ligne (k) sont susceptible d'être additionnées dans un additionneur (A1), et la nouvelle somme intermédiaire ou la somme finale résultante est susceptible d'être renvoyée à la mémoire intermédiaire (Zs), auquel cas, à la fin de chacune des lignes (k), l'intégrale de ligne $(Z_k)$ présente dans la mémoire intermédiaire (Zs) en tant que somme finale, est susceptible d'être transférée à l'emplacement associé de la mémoire de lignes (ZSp).

3. Dispositif suivant la revendication 1 ou 2, caractérisé par le fait que dans l'intégrateur de colonnes (SI), la valeur instantanée de la luminosité du balayage de l'image et la somme intermédiaire, pouvant être tirée de l'emplacement associé (SSp) de la mémoire de colonnes, des valeurs précédentes de luminosité de la colonne respective (i) sont susceptibles d'être additionnées dans un additionneur (A2) et la nouvelle somme intermédiaire résultante ou l'intégrale de colonnes $(S_i)$ présente en tant que somme finale sont susceptibles d'être à nouveau transmises à l'emplacement associé (SSp) de la mémoire de colonnes.

4. Dispositif suivant l'une des revendications précédentes, caractérisé par le fait que l'intégrale de lignes $(Z_k)$ et l'intégrale de colonnes $(S_i)$ sont susceptibles d'être insérées, par l'intermédiaire d'un multiplexeur (Mp) dans l'unité de calcul (Re), après chaque parcours de l'image.

5. Dispositif suivant l'une des revendications précédentes, caractérisé par le fait que l'intégrale de lignes $(Zk)$ et l'intégrale de colonnes $(S_i)$ sont susceptibles d'être transmises par l'intermédiaire d'une mémoire tampon (Ps) dans l'unité de calcul (Re) après chaque parcours de l'image.

# FIG 1

# FIG 2

**FIG 3**

**FIG 4**